# EUROPÄISCHE PATENTSCHRIFT

(11) **EP 3 768 522 B1**
(45) Veröffentlichungstag und Bekanntmachung des Hinweises auf die Patenterteilung: **29.12.2021**
(21) Anmeldenummer: 20712219.3
(22) Anmeldetag: 05.03.2020
(51) Int. Cl.: B44C 5/04, B27D 5/00, B29C 63/00

(54) **POSTFORMING-PANEEL**
POST-FORMING LAMINATE
PANNEAU DE POSTFORMAGE

(30) Priorität: 11.04.2019 DE 102019205220
(43) Veröffentlichungstag der Anmeldung: 27.01.2021
(73) Patentinhaber: Kaindl Invest GmbH, 5071 Wals bei Salzburg (AT)
(72) Erfinder: FALLER, Christian, 5440 Golling (AT)
(74) Vertreter: Herzog, Markus
(86) Internationale Anmeldenummer: PCT/EP2020/055838
(87) Internationale Veröffentlichungsnummer: WO 2020/207673

(56) Entgegenhaltungen:
- EP-A1- 0 545 390
- EP-A2- 0 389 400
- EP-A2- 1 386 720
- WO-A1-2004/054769
- DE-A1- 19 615 879
- DE-U1-202008 006 997

## Beschreibung

Die vorliegende Erfindung betrifft ein Paneel, insbesondere eine Arbeitsplatte gemäß dem Oberbegriff des Anspruchs 1.

Aus dem Stand der Technik sind Arbeitsplatten bekannt, welche beispielsweise als Küchenarbeitsplatten verwendet werden, bei welchen eine Trägerplatte mit einer Dekorschicht versehen ist, welche sich von einer oberen Fläche der Trägerplatte über eine vordere Fläche der Trägerplatte zu einer unteren Fläche der Trägerplatte erstreckt. Werden diese Arbeitsplatten an ihrem Bestimmungsort verbaut, so ist es üblicherweise notwendig, diese zuzuschneiden. Insbesondere beim Einsatz von Fräswerkzeugen und/oder bei Schnittlinien, welche die vordere Fläche der Trägerplatte unter einem von 90° abweichenden Winkel schneiden, können Arbeitsplatten des Stands der Technik dazu neigen, dass die Schnittkante an der vorderen Fläche der Trägerplatte bzw. an der daran angebrachten Dekorschicht "ausfranst", das heißt, dass sich die Dekorschicht im Bereich der Schnittkante derart von der Trägerplatte löst, dass die Dekorschicht die vordere Fläche der Trägerplatte nicht mehr vollständig bedeckt.

Dokument EP 0 389 400 A2, welches als nächstliegender Stand der Technik erachtet wird, offenbart ein Paneel, umfassend eine Trägerplatte mit einer oberen und einer unteren Hauptfläche und einer vorderen Fläche, an welcher eine separat ausgebildete Stützkante angeordnet ist, wobei eine Dekorschicht außerhalb der Trägerplatte und der Stützkante angeordnet ist.

Ferner sei auf die Dokumente WO 2004/054769 A1, EP 1 286 720 A1, DE 196 15 879 A1 und DE 20 2008 006997 U1 hingewiesen.

Es ist daher die Aufgabe der vorliegenden Erfindung, ein Paneel bereitzustellen, welches eine verbesserte Haftung der Dekorschicht an der Trägerplatte aufweist, insbesondere wenn das Paneel zugeschnitten wird.

Diese Aufgabe wird erfindungsgemäß durch ein Paneel, insbesondere eine Arbeitsplatte, gemäß Anspruch 1 gelöst.

Das Einbringen einer Stützkante an der vorderen Fläche der Trägerplatte kann eine bessere, insbesondere großflächigere, Verbindung der Dekorschicht ermöglichen, so dass eine glattere Schnittkante beim Bearbeiten des Paneels erreicht werden kann.

Üblicherweise sind derartige Trägerplatten aus einer Vielzahl von Holzstückchen aufgebaut, welche miteinander verpressten werden. Dabei kann vor einem Befüllen einer Pressform mit den Holzstückchen darauf geachtet werden, dass zunächst hauptsächlich diejenigen Holzstückchen in die Form befüllt werden, welche unter den zur Verfügung stehenden Holzstückchen die kleinsten Größen aufweisen, auf diese erste Schicht können dann Holzstückchen mit mittleren und großen Größen aufgeschüttet werden und abschließend kann wieder eine Schicht aus kleinen Holzstückchen in die Form gefüllt werden. Eine derartige Trägerplatte weist im verpressten Zustand eine sehr homogene Oberfläche an ihren beiden Hauptflächen auf, an welchen die kleineren Holzstückchen angeordnet sind.

Jedoch weisen solche Trägerplatten, beispielsweise auch bedingt durch die Tatsache, dass die Trägerplatten nach dem Herstellungsschritt auf ein bestimmtes Maß zugeschnitten werden, an ihren Seitenflächen, wie zum Beispiel einer vorderen Fläche, eine stark strukturierte, das heißt inhomogene, Oberfläche auf. Wird nun eine Dekorschicht direkt an der vorderen Fläche angebracht, so können aus der vorderen Fläche der Trägerplatte hervorstehende Holzstückchen die Dekorschicht nach außen wölben oder die Dekorschicht kann sich in zwischen den Holzstückchen an der vorderen Fläche der Trägerplatte vorhandene Hohlräume hinein wölben, wodurch die Dekorschicht uneben oder sogar verletzt werden kann. Eine unebene Dekorschicht kann entweder von einem Benutzer/Käufer des Paneels als qualitativ minderwertig empfunden werden oder bereits im Produktionsprozess als Ausschuss deklariert werden, wodurch die Herstellkosten ansteigen können.

Die erfindungsgemäße Anordnung der Stützkante kann es ferner ermöglichen, die Oberfläche der vorderen Fläche der Trägerplatte zu "homogenisieren", so dass Unregelmäßigkeiten der vorderen Fläche der Trägerplatte die Dekorschicht nicht beeinflussen, da die Unregelmäßigkeiten durch die im Wesentlichen homogene Stützkante ausgeglichen werden können.

Darüber hinaus kann die an der vorderen Fläche der Trägerplatte angeordnete Stützkante auch eine Stoßfestigkeit des Paneels gegenüber Krafteinwirkungen auf die vordere Fläche des Paneels verbessern. Dies kann insbesondere daher kommen, dass die Stützkante eine höhere Dichte aufweisen kann als die vordere Fläche der Trägerplatte.

Aus dem Stand der Technik bekannte Paneele verwenden zum Verkleben der Dekorschicht Weißleim, welcher jedoch unter Abspaltung von Wasser aushärtet, welches wiederum von wenigstens einem der Materialien, welche durch den Weißleim verbunden werden, aufgenommen werden muss. Insbesondere die Dekorschicht ist üblicherweise nicht dazu geeignet, von dem Weißleim abgeschiedenes Wasser aufzunehmen.

Die Verwendung von Schmelzkleber zumindest im Bereich der Stützkante, um die Dekorschicht mit der Stützkante zu verbinden, kam für die Fachwelt bislang aufgrund des höheren Aufwands der Verarbeitung von Schmelzkleber im Vergleich zu Weißleim nicht in Betracht. Die Erfinder der vorliegenden Erfindung haben jedoch trotz des Vorurteils der Fachwelt erkannt, dass hierdurch für die Herstellung der Stützkante auch Materialien ausgewählt werden können, welche im Wesentlichen nichtwasseraufnehmend sind.

Die Dekorschicht, welche sich von der oberen Fläche der Trägerplatte über die vordere Fläche der Trägerplatte und die Stützkante zu der unteren Fläche der Trägerplatte erstreckt, kann dabei insbesondere als eine einzelne, durchgehende Dekorschicht-Bahn ausgebildet sein, welche derart um die vordere Fläche der Trägerplatte bzw. die Stützkante geformt wird, dass die Dekorschicht von der oberen Fläche der Trägerplatte bis zu der unteren Fläche der Trägerplatte nahtlos übergeht. Dabei kann die Dekorschicht selbst als Verbundstoff aus einer Mehrzahl von miteinander verbundenen Bahnen ausgebildet sein. Die vorliegende Erfindung ist aber auch auf Paneele anwendbar, bei welchen die mit der Trägerplatte verbundene Dekorschicht aus einer Aneinanderreihung separat ausgebildeter Abschnitte aufgebaut ist, wie beispielsweise einer Dekorschicht, welche an der oberen Hauptfläche der Trägerplatte angeordnet ist, einer Dekorschicht, welche an der vorderen Fläche der Trägerplatte bzw. der Stützkante angeordnet ist, und einer Dekorschicht, welche an der unteren Hauptfläche der Trägerplatte angeordnet ist.

Vorteilhafterweise kann die Stützkante eine Mehrzahl miteinander verpresster Bahnen umfassen. Als derartige "Bahnen" sollen hier insbesondere mehrere miteinander verpresste bandförmige Streifen verstanden werden, welche sich entlang der Haupterstreckung der Stützkante entlang einer Stärkenrichtung der Stützkante parallel erstrecken.

Derartige miteinander verpressten Bahnen, welche auch als "CPL (Continuous Pressure Laminate)" bezeichnet werden, können beispielsweise bei einem Druck von 1500 kg miteinander verpresst werden.

Bekannte Ansätze, welche vorschlagen, eine Stützkante aus MDF oder HDF zu verwenden, weisen den Nachteil auf, dass diese Stützkanten als Stäbe bereitgestellt und verarbeitet werden müssen, wodurch der Platzbedarf einer Herstellungsanlage für solche Paneele, abhängig von der Länge der als Stäbe bereitgestellten Stützkanten, um bis zu 20 Meter ansteigen kann.

Die vorliegende Erfindung kann es ermöglichen, die Stützkanten als auf Rollen aufgewickeltes Bandmaterial bereitzustellen, wodurch sowohl ein Platzbedarf der Herstellungsanlage als auch ein Logistik- und Lageraufwand deutlich reduziert werden kann.

Um beispielsweise einen kontinuierlichen Herstellungsprozess der erfindungsgemäßen Paneele ermöglichen zu können, kann es vorgesehen sein, eine Mehrzahl von Rollen zu verwenden, welche jeweils Stützkanten tragen. Um das Ende einer Rolle zu identifizieren, kann an einer vorbestimmten Stelle des auf der Rolle aufgewickelten Stützkanten-Materials eine Markierung aus fluoreszierender Farbe aufgebracht sein, welche durch eine dazu geeignete Vorrichtung erkannt werden kann. Auf Grundlage der durch die Vorrichtung erkannten fluoreszierenden Farbe kann dann ein Rollenwechsel initiiert werden. Dabei kann der Rollenwechsel so koordiniert werden, dass das Ende der ersten Rolle mit einem Ende einer Trägerplatte zusammenfällt, auf weiche das Stützkanten-Material aufgebracht wird.

Natürlich ist es dabei denkbar, sowohl für die fortlaufende Applikation des Stützkanten-Materials auf Trägerplatten als auch für den Fall eines Rollenwechsels Schneidwerkzeuge zu verwenden, welche dazu eingerichtet sind, das Stützkanten-Material zu durchtrennen.

Erfindungsgemäß weist die an der Trägerplatte angeordnete Stützkante an ihrer der Trägerplatte abgewandten Seite eine Bahn aus Pergamentpapier auf. Es hat sich gezeigt, dass die Anordnung eines Pergamentpapiers an derjenigen Seite der Stützkante, welche mit der Dekorschicht verbunden werden soll, eine Verbindung der Stützkante mit der Dekorschicht verbessern kann. Zusätzlich kann die Stützkante auch an ihrer der Trägerplatte zugewandten Seite eine Bahn aus Pergamentpapier aufweisen.

Gemäß der vorliegenden Erfindung umfasst die Stützkante ferner ein Gegenzugpapier und zwischen dem Gegenzugpapier und dem Pergamentpapier eine Mehrzahl an, insbesondere Phenolharz imprägnierten, Kernlagen. Eine derart aufgebaute Stützkante kann aufgrund ihrer industriellen Fertigung in einem höchsten Maße kontrollierbar und reproduzierbar hergestellt werden, beispielsweise im Vergleich zu einer Stützkante aus Holzfurnier, welches als Naturprodukt natürlichen Qualitätsschwankungen unterliegt. Je nach Auswahl und Anzahl an verwendeten Kernlagen kann eine Stärke, das heißt eine Dicke der Stützkante senkrecht zu einer Hauptfläche der miteinander verpressten Bahnen bzw. des bandförmigen Stützkanten-Materials, genau eingestellt werden.

Insbesondere können zur Herstellung der Stützkante dieselben Anlagen verwendet werden, welche auch zur Herstellung der Dekorschicht verwendet werden.

Es ist ferner möglich, zusätzlich oder alternativ zu einer zweckbestimmten Herstellung einer Stützkante, auch Material aus ähnlichen Produktionsprozessen, wie beispielsweise der Herstellung der Dekorschicht für das erfindungsgemäße Paneel oder einer Herstellung einer Dekorschicht für ein davon fremdes Paneel, zum Beispiel ein Fußbodenpaneel, als Stützkanten-Material zu verwenden. Dabei kann es für die Verwendung dieses Materials als Stützkante ohne Belang sein, ob an dem Material ein

Dekor angebracht ist und/oder ob das Material in seinem Produktionsprozess als Ausschuss deklariert wurde, solange es die Anforderungen an die erfindungsgemäße Stützkante erfüllt.

Die Stützkante kann bandförmig ausgebildet sein und an wenigstens einer ihrer Hauptflächen mit einer Struktur versehen sein. Eine strukturierte Fläche der Stützkante kann dem Schmelzkleber eine vergrößerte Oberfläche, bei gleichen Außenmaßen, bieten, wodurch wiederum eine Haftung des Schmelzklebers an der Stützkante und damit eine Haftung der Dekorschicht an der Stützkante verbessert werden kann. Eine solche Strukturierung der Oberfläche kann beispielsweise durch Pressen mit einem formgebenden Werkzeug, zum Beispiel einer Walze, oder durch Anschleifen erreicht werden.

Ferner kann zwischen der Trägerplatte und der Stützkante eine Schicht aus Schmelzkleber angeordnet sein. Dabei kann der zwischen der Trägerplatte und der Stützkante verwendete Schmelzkleber zu dem zwischen der Stützkante und der Dekorschicht verwendeten Schmelzkleber gleich sein oder zu diesem unterschiedlich sein. Überraschenderweise hat sich gezeigt, dass, obwohl das Material der Trägerplatte dazu geeignet ist, Wasser aufzunehmen, eine Verbindung der Stützkante mit der Trägerplatte unter Verwendung von Schmelzkleber eine mindestens ebenso gute Verbindung darstellt wie eine Verbindung der Stützkante mit der Trägerplatte unter Verwendung von Weißleim. Insbesondere kann es durch die Verwendung des Schmelzklebers verhindert werden, dass sich, wie es bei der Verwendung von Weißleim der Fall sein kann, abgeschiedenes Wasser zwischen der nicht-wasseraufnehmenden Stützkante und der Klebstoffschicht ansammelt und so eine Verbindung der Dekorschicht mit der Stützkante schwächt.

Vorteilhafterweise kann die Trägerplatte zusammen mit der daran angeordneten Stützkante an wenigsten einer aus der Kante zwischen oberer Fläche der Trägerplatte und vorderer Fläche der Trägerplatte bzw. Stützkante und der Kante zwischen unterer Fläche der Trägerplatte und vorderer Fläche der Trägerplatte bzw. Stützkante eine Verrundung aufweisen. Der abgerundete Übergang zwischen oberer und/oder unterer Hauptfläche der Trägerplatte zu der vorderen Fläche der Trägerplatte kann eine Faltung der Dekorschicht vermeiden, welche wiederum zu einem Bruch der Dekorschicht führen kann. Ferner kann eine derartige Verrundung ein enges Anliegen der Dekorschicht an der Trägerplatte bzw. an der Stützkante fördern.

Zwischen der Dekorschicht und wenigsten einer aus der Kante zwischen oberer Fläche der Trägerplatte und vorderer Fläche der Trägerplatte und der Kante zwischen unterer Fläche der Trägerplatte und vorderer Fläche der Trägerplatte kann eine zusätzliche Raupe aus Schmelzkleber angeordnet sein. Analog zu der in der Fachwelt bekannten "Schweißraupe" soll auch hier der Begriff "Raupe" als eine längliche Bahn verstanden werden, welche einen im Wesentlichen kreisförmigen oder zumindest ovalen Querschnitt aufweist.

Das Anordnen einer Schmelzkleberraupe an wenigstens einer der Längskanten der vorderen Fläche der Trägerplatte kann dazu dienen, einen Kontaktverlust zwischen Dekorschicht und Trägerplatte oder Stützkante auszugleichen. Somit kann zusätzlicher Halt zum Verbinden der Dekorschicht mit der Trägerplatte und der Stützkante bereitgestellt werden und ein Ablösen und/oder eine Beschädigung der Dekorschicht verhindert werden.

Insbesondere kann die Stützkante eine Stärke von höchstens 1,5 mm, insbesondere von höchstens 1,2 mm, vorteilhafterweise von 0,5 mm bis 0,9 mm, aufweisen. Es hat sich gezeigt, dass Materialien, insbesondere Schichtstoffe, welche eine Stärke von mehr als 1,5 mm aufweisen, nicht mehr zerstörungsfrei auf eine Rolle aufbringbar sind, welche einen für einen Herstellungsprozess eines erfindungsgemäßen Paneels akzeptablen und handhabbaren Durchmesser aufweist. Entsprechend den Standardmaßen von beispielsweise Küchenarbeitsplatten kann die Stützkante vorteilhafterweise eine Breite von ca. 40 mm aufweisen.

Ferner kann die Trägerplatte an ihrer vorderen Fläche eine Ausnehmung aufweisen, in welche die Stützkante eingelegt ist. Auf diese Weise kann das Ausmaß, um welches die Stützkante um ihre Stärke von der vorderen Fläche der Trägerplatte vorsteht, reduziert werden.

Dabei kann die der Dekorschicht zugewandte Fläche der Stützkante mit der vorderen Fläche der Trägerplatte im Wesentlichen bündig abschließen. Dies kann insbesondere bei Paneelen vorteilhaft sein, welche am Übergang zwischen der vorderen Fläche und der oberen Fläche der Trägerplatte eine spitz zulaufende Kante, von beispielsweise 90°, ausbilden. Sollte die Stützkante hier nicht die vordere Fläche der Trägerplatte im Wesentlichen vollständig bedecken, so kann die Stützkante in die vordere Fläche der Trägerplatte eingelassen werden, um so eine ebene vordere Fläche aus Trägerplatte und Stützkante zu erzeugen.

Vorteilhafterweise kann zwischen der oberen Fläche der Trägerplatte und der Dekorschicht eine Schicht aus Weißleim angeordnet sein. Da beispielsweise Küchenarbeitsplatten den sogenannten "Topftest" erfüllen müssen, bei welchem ein Topf mit einer vorbestimmten Temperatur für eine vorbestimmte Zeit auf die mit der Dekorschicht versehene obere Hauptfläche der Küchenarbeitsplatte aufgesetzt wird und anschließend überprüft wird, ob die Küchenarbeitsplatte dadurch beschädigt und/oder deformiert wurde, bietet die Verwendung von Weißleim zur Verbindung der Dekorschicht mit der oberen Hauptfläche der Trägerplatte den Vorteil, dass Weißleim durch Temperatureintrag nicht erneut aufgeweicht bzw. geschmolzen werden kann.

In einem zweiten Aspekt betrifft die vorliegende Erfindung ein Verfahren, insbesondere Postforming-Verfahren, zum Herstellen eines Paneels, umfassend die Schritte:
Bereitstellen einer Trägerplatte, welche eine obere und eine untere Hauptfläche und eine sich von der oberen Hauptfläche zu der unteren Hauptfläche erstreckende vordere Fläche aufweist,
Bereitstellen einer von der Trägerplatte separat ausgebildeten Stützkante, Anordnen der Stützkante an der vorderen Fläche der Trägerplatte,
Bereitstellen einer von der Trägerplatte und der Stützkante separat ausgebildeten Dekorschicht,
Anordnen der Dekorschicht an der oberen Fläche der Trägerplatte,
Anordnen einer Schicht aus Schmelzkleber an einem Abschnitt der Dekorschicht, welcher dazu bestimmt ist, mit der Stützkante verbunden zu werden, und
Anordnen der Dekorschicht, so dass sich diese von der oberen Fläche der Trägerplatte über die vordere Fläche der Trägerplatte und die Stützkante zu der unteren Fläche der Trägerplatte erstreckt.

Es sei an dieser Stelle darauf hingewiesen, dass sämtliche in Bezug auf die erfindungsgemäße Vorrichtung beschriebenen Merkmale und Vorteile auch auf das erfindungsgemäße Verfahren Anwendung finden können und umgekehrt.

In einer Weiterbildung der vorliegenden Erfindung kann der Schritt des Anordnens der Schicht aus Schmelzkleber ein Auftragen des Schmelzklebers bei einer Temperatur von 150°C bis 250°C, insbesondere von 190°C bis 210°C, umfassen. Die Verwendung von Schmelzkleber, welcher derart erhitzt worden ist, kann sich insbesondere vorteilhaft auf eine Verbindung des Schmelzklebers mit sowohl der Dekorschicht als auch der Stützkante bzw. der Trägerplatte auswirken.

Alternativ oder zusätzlich kann das Verfahren ferner einen Schritt eines Erhitzens der Dekorschicht umfassen. Insbesondere können bei dem Schritt des Erhitzens Heizelemente, wie beispielsweise Strahler, verwendet werden, welche bei einer Betriebstemperatur von ca. 350°C bis 450°C und einem Abstand der Heizelemente zu der Dekorschicht von 20 cm bis 40 cm die Dekorschicht für etwa 2 s bis 7 s erhitzen. Das Erhitzen der Dekorschicht kann eine Verformbarkeit der Dekorschicht steigern, so dass die Gefahr einer Beschädigung der Dekorschicht beim Biegen und Anpressen der Dekorschicht an die Trägerplatte und an die Stützkante weiter reduziert oder sogar eliminiert werden kann.

Im Folgenden wird die vorliegende Erfindung in größerem Detail mit Bezug auf die begleitenden Zeichnungen beschrieben werden. Es stellt dar:
- Figur 1: eine schematische Seitenquerschnittsansicht eines erfindungsgemäßen Paneels in einem Zwischenstadium eines Herstellungsprozesses; und
- Figur 2: eine schematische Seitenquerschnittsansicht eines erfindungsgemäßen Paneels am Ende seines Herstellungsprozesses.

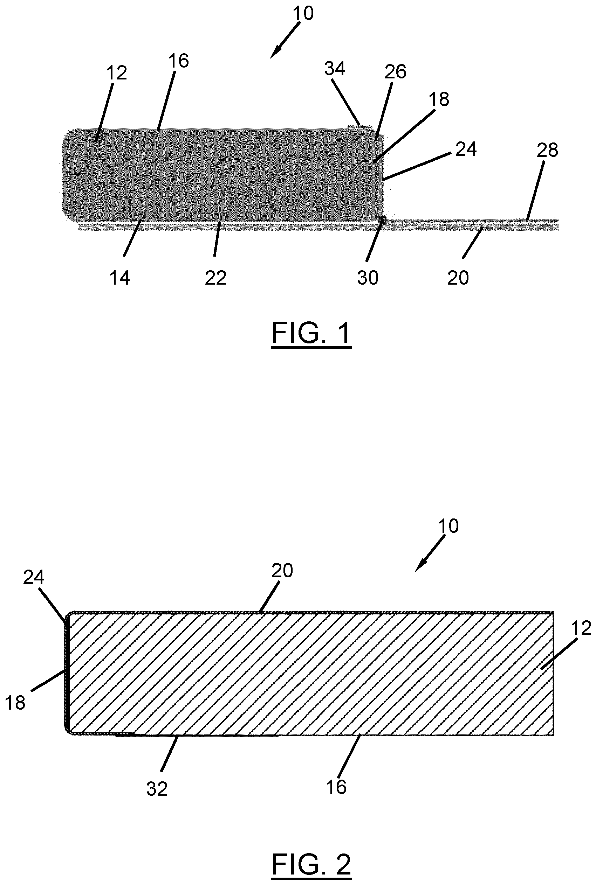

In Figur 1 ist ein erfindungsgemäßes Paneel allgemein mit dem Bezugszeichen 10 bezeichnet. Das Paneel 10, welches hier für nachfolgende Produktionsschritte, welche weiter unten beschrieben werden, kopfüber angeordnet ist, umfasst eine Trägerplatte 12, welche eine obere Hauptfläche 14, eine untere Hauptfläche 16 und eine vordere Fläche 18 aufweist.

In einem der Figur 1 vorgelagerten Produktionsschritt wird an der oberen Hauptfläche 14 der Trägerplatte 12 eine Dekorschicht 20 angeordnet, welche hier unter Verwendung einer Schicht aus Weißleim 22 mit der oberen Hauptfläche 14 der Trägerplatte 12 verbunden ist. Anschließend wird das Paneel 10 für weitere Produktionsschritte derart gewendet, dass die Trägerplatte 12 auf der Dekorschicht 20 aufliegt, wie in Figur 1 gezeigt.

An der vorderen Fläche 18 der Trägerplatte 12 ist eine Stützkante 24 angeordnet, welche sich in einer Richtung orthogonal zu der Blattebene von Figur 1 über die gesamte Länge der Trägerplatte 12 erstreckt. Zwischen der Stützkante 24 und der vorderen Fläche 18 der Trägerplatte 12 ist eine Schicht aus Schmelzkleber 26 angeordnet. Dabei kann die Stützkante 24 vor oder nach dem Schritt des Wendens des Paneels 10, sogar vor dem Produktionsschritt des Verbindens der Dekorschicht 20 mit der Trägerplatte 12, mit der Trägerplatte 12 verbunden werden.

Die Stützkante 24 ist hier aus einer Mehrzahl miteinander verbundener Bahnen aufgebaut, welche im miteinander verpressten Zustand eine Stärke der Stützkante 24 definieren, das heißt, dass sich die Bahnen der Stützkante 24 orthogonal zu der Blattebene von Figur 1 und parallel zu der vorderen Fläche 18 der Trägerplatte 12 angeordnet erstrecken.

An einem über die Trägerplatte 12 hinausragenden Abschnitt der Dekorschicht 22 ist eine weitere Schicht aus Schmelzkleber 28 angeordnet. Ferner ist in Figur 1 zu erkennen, dass entlang einer Kante zwischen der vorderen Fläche 18 der Trägerplatte 12 bzw. der Stützkante 24 und dem über die Trägerplatte 14 überstehenden Abschnitt der Dekorschicht 20 eine Raupe 30 aus Schmelzkleber angeordnet ist.

In einem nachgelagerten Produktionsschritt wird der über die Trägerplatte 12 hinausragende Abschnitt der Dekorschicht 20 dann derart umgeformt, dass er sich sowohl über die Stützkante als auch über einen Abschnitt der unteren Hauptfläche 16 der Trägerplatte 12 erstreckt.

Ein solches finales Paneel 10 ist in Figur 2 dargestellt, in welcher zu erkennen ist, in welcher Weise sich die Dekorschicht 20 entlang der Trägerplatte 12 erstreckt, wobei die Stützkante 24 zwischen der Dekorschicht 20 und der vorderen Fläche 18 der Trägerplatte 12 eingefasst ist.

In Figur 2 ist ferner an der unteren Hauptfläche 16 der Trägerplatte 12 eine Lackschicht 32 dargestellt, welche dazu bestimmt ist, einen Übergang der Dekorschicht 20 zu der unteren Hauptfläche 16 der Trägerplatte 12 und einen daran anschließenden Abschnitt der unteren Hauptfläche 16 der Trägerplatte 12 dampfdicht zu versiegeln. Hierdurch kann beispielsweise verhindert werden, dass Wasserdampf, welcher aus einer unter dem Paneel 10, welches hier als Küchenarbeitsplatte ausgebildet ist, angeordneten Spülmaschine aufsteigt, in das Paneel 10 eindringen und dieses beschädigen bzw. deformieren kann.

Wie ebenfalls in Figur 2 dargestellt, kann es vorteilhaft sein, einen Teil der unteren Hauptfläche 16 der Trägerplatte 12 über wenigstens die Länge, über welche sich die Dekorschicht 20 von der vorderen Fläche 18 der Trägerplatte 12 weg entlang der unteren Hauptfläche 16 der Trägerplatte 12 erstreckt, abzutragen, um so einen im Wesentlichen bündigen Übergang der äußeren Fläche der Dekorschicht 20 zu der unteren Hauptfläche 16 der Trägerplatte 12 zu erhalten.

Mit erneutem Bezug auf Figur 1, ist dort ferner die Option dargestellt, an der unteren Hauptfläche 16 der Trägerplatte 12 eine weitere Schicht 34 aus Schmelzkleber aufzutragen, welche die Verbindung der Dekorschicht 20 mit der unteren Hauptfläche 16 der Trägerplatte 12 weiter verbessern kann. In dem in Figur 1 gezeigten Ausführungsbeispiel ist der Schmelzkleber der Schicht 34 identisch zu dem Schmelzkleber der Schicht 28.

## Patentansprüche

1. Paneel (10), insbesondere Arbeitsplatte, umfassend
eine Trägerplatte (12), welche eine obere (14) und eine untere (16) Hauptfläche und eine sich von der oberen Hauptfläche (14) zu der unteren Hauptfläche (16) erstreckende vordere Fläche (18) aufweist,
eine von der Trägerplatte (12) separat ausgebildete Stützkante (24), welche an der vorderen Fläche (18) der Trägerplatte (12) angeordnet ist, und
eine von der Trägerplatte (12) und der Stützkante (24) separat ausgebildete Dekorschicht (20), welche sich von der oberen Fläche der Trägerplatte (12) über die vordere Fläche (18) der Trägerplatte (12) und die Stützkante (24) zu der unteren Fläche der Trägerplatte (12) erstreckt,
wobei die Stützkante (24) an der vorderen Fläche (18) der Trägerplatte (12) zwischen Dekorschicht (20) und Trägerplatte (12) eingefasst ist, und
wobei zwischen der Stützkante (24) und der Dekorschicht (20) eine Schicht (28) aus Schmelzkleber angeordnet ist, welche dazu eingerichtet ist, die Dekorschicht (20) mit der Stützkante (24) zu verbinden,
**dadurch gekennzeichnet, dass** die an der Trägerplatte (12) angeordnete Stützkante (24) an ihrer der Trägerplatte (12) abgewandten Seite eine Bahn aus Pergamentpapier aufweist, und
dass die Stützkante (24) ferner ein Gegenzugpapier und zwischen dem Gegenzugpapier und dem Pergamentpapier eine Mehrzahl an, insbesondere Phenolharz imprägnierten, Kernlagen umfasst.

2. Paneel (10) nach Anspruch 1,
**dadurch gekennzeichnet, dass** die Stützkante (24) eine Mehrzahl miteinander verpresster Bahnen umfasst.

3. Paneel (10) nach einem der Ansprüche 1 oder 2,
**dadurch gekennzeichnet, dass** die Stützkante (24) bandförmig ausgebildet ist und an wenigstens einer ihrer Hauptflächen mit einer Struktur versehen ist.

4. Paneel (10) nach einem der Ansprüche 1 bis 3,
**dadurch gekennzeichnet, dass** ferner zwischen der Trägerplatte (12) und der Stützkante (24) eine Schicht (26) aus Schmelzkleber angeordnet ist.

5. Paneel (10) nach einem der Ansprüche 1 bis 4,
**dadurch gekennzeichnet, dass** die Trägerplatte (12) zusammen mit der daran angeordneten Stützkante (24) an wenigsten einer aus der Kante zwischen oberer Fläche (14) der Trägerplatte (12) und vorderer Fläche (18) der Trägerplatte (12) bzw. Stützkante (24) und der Kante zwischen unterer Fläche (16) der Trägerplatte (12) und vorderer Fläche (18) der Trägerplatte (12) bzw. Stützkante (24) eine Verrundung aufweist.

6. Paneel (10) nach einem der Ansprüche 1 bis 5,
**dadurch gekennzeichnet, dass** zwischen der Dekorschicht (20) und wenigsten einer aus der Kante zwischen oberer Fläche (14) der Trägerplatte (12) und vorderer Fläche (18) der Trägerplatte (12) und der Kante zwischen unterer Fläche (16) der Trägerplatte (12) und vorderer Fläche (18) der Trägerplatte (12) eine zusätzliche Raupe (30) aus Schmelzkleber angeordnet ist.

7. Paneel (10) nach einem der Ansprüche 1 bis 6,
**dadurch gekennzeichnet, dass** die Stützkante (24) eine Stärke von höchstens 1,5 mm, insbesondere von höchstens 1,2 mm, vorteilhafterweise von 0,5 mm bis 0,9 mm, aufweist.

8. Paneel (10) nach einem der Ansprüche 1 bis 7,
**dadurch gekennzeichnet, dass** die Trägerplatte (12) an ihrer vorderen Fläche (18) eine Ausnehmung aufweist, in welche die Stützkante (24) eingelegt ist.

9. Paneel (10) nach Anspruch 8,
**dadurch gekennzeichnet, dass** die der Dekorschicht (20) zugewandte Fläche der Stützkante (24) mit der vorderen Fläche (18) der Trägerplatte (12) im Wesentlichen bündig abschließt.

10. Paneel (10) nach einem der Ansprüche 1 bis 9,
**dadurch gekennzeichnet, dass** zwischen der oberen Fläche (14) der Trägerplatte (12) und der Dekorschicht (20) eine Schicht aus Weißleim (22) angeordnet ist.

11. Verfahren, insbesondere Postforming-Verfahren, zum Herstellen eines Paneels (10), umfassend die Schritte:
- Bereitstellen einer Trägerplatte (12), welche eine obere (14) und eine untere (16) Hauptfläche und eine sich von der oberen Hauptfläche (14) zu der unteren Hauptfläche (16) erstreckende vordere Fläche (18) aufweist,
- Bereitstellen einer von der Trägerplatte (12) separat ausgebildeten Stützkante (24),
- Anordnen der Stützkante (24) an der vorderen Fläche (18) der Trägerplatte (12),
- Bereitstellen einer von der Trägerplatte (12) und der Stützkante (24) separat ausgebildeten Dekorschicht (20),
- Anordnen der Dekorschicht (20) an der oberen Fläche (14) der Trägerplatte (12),
- Anordnen einer Schicht (28) aus Schmelzkleber an einem Abschnitt der Dekorschicht (20), welcher dazu bestimmt ist, mit der Stützkante (24) verbunden zu werden, und
- Anordnen der Dekorschicht (20), so dass sich diese von der oberen Fläche (14) der Trägerplatte (12) über die vordere Fläche (18) der Trägerplatte (12) und die Stützkante (24) zu der unteren Fläche (16) der Trägerplatte (12) erstreckt,
**dadurch gekennzeichnet, dass** die an der Trägerplatte (12) angeordnete Stützkante (24) an ihrer der Trägerplatte (12) abgewandten Seite eine Bahn aus Pergamentpapier aufweist, und dass die Stützkante (24) ferner ein Gegenzugpapier und zwischen dem Gegenzugpapier und dem Pergamentpapier eine Mehrzahl an, insbesondere Phenolharz imprägnierten, Kernlagen umfasst.

12. Verfahren nach Anspruch 11,
**dadurch gekennzeichnet, dass** der Schritt des Anordnens der Schicht (28) aus Schmelzkleber ein Auftragen des Schmelzklebers bei einer Temperatur von 150°C bis 250°C, insbesondere von 190°C bis 210°C, umfasst.

13. Verfahren nach Anspruch 11 oder 12,
**dadurch gekennzeichnet, dass** das Verfahren ferner einen Schritt eines Erhitzens der Dekorschicht (20) umfasst.

## Claims

1. Panel (10), in particular a worktop, comprising
a carrier plate (12) which has an upper (14) and a lower (16) main surface, a front surface (18) which extends from the upper main surface (14) to the lower main surface (16), a support edge (24) which is formed separately from the carrier plate (12) and is arranged on the front surface (18) of the carrier plate (12), and
a decorative layer (20) which is formed separately from the carrier plate (12) and the support edge (24) and extends from the upper surface of the carrier plate (12) over the front surface (18) of the carrier plate (12) and the support edge (24) to the lower surface of the support plate (12),
the support edge (24) is enclosed by the decorative layer (20) and the carrier plate (12) on the front surface (18) of the carrier plate (12), and
a layer (28) of hot-melt adhesive designed to connect the decorative layer (20) to the support edge (24) being arranged between the support edge (24) and the decorative layer (20),
**characterised in that** the support edge (24) arranged on the carrier plate (12) has a sheet of parchment paper on the side thereof that faces away from the carrier plate (12), and **in that** the support edge (24) further comprises a backing paper and a plurality of, in particular phenolic resin-impregnated, core plies between the backing paper and the parchment paper.

2. Panel (10) according to claim 1,
**characterised in that** the support edge (24) comprises a plurality of sheets pressed together.

3. Panel (10) according to either claim 1 or claim 2,
**characterised in that** the support edge (24) is designed in the form of a strip and is provided with a structure on at least one of the main surfaces thereof.

4. Panel (10) according to any of claims 1 to 3,
**characterised in that** a layer (26) of hot-melt adhesive is also arranged between the carrier plate (12) and the support edge (24).

5. Panel (10) according to any of claims 1 to 4,
**characterised in that** the carrier plate (12), together with the support edge (24) arranged thereon, has a rounding on at least one of the edge between the upper surface (14) of the carrier plate (12) and the front surface (18) of the carrier plate (12) or support edge (24) and the edge between the lower surface (16) of the carrier plate (12) and the front surface (18) of the carrier plate (12) or support edge (24).

6. Panel (10) according to any of claims 1 to 5,
**characterised in that** an additional bead (30) of hot-melt adhesive is arranged between the decorative layer (20) and at least one of the edge between the upper surface (14) of the carrier plate (12) and the front surface (18) of the carrier plate (12) and the edge between the lower surface (16) of the carrier plate (12) and the front surface (18) of the carrier plate (12).

7. Panel (10) according to any of claims 1 to 6,
**characterised in that** the support edge (24) has a thickness of at most 1.5 mm, in particular of at most 1.2 mm, advantageously from 0.5 mm to 0.9 mm.

8. Panel (10) according to any of claims 1 to 7,
**characterised in that** the carrier plate (12) has a recess on the front surface (18) thereof, into which recess the support edge (24) is inserted.

9. Panel (10) according to claim 8,
**characterised in that** the surface of the support edge (24) that faces the decorative layer (20) lies substantially flush with the front surface (18) of the carrier plate (12).

10. Panel (10) according to any of claims 1 to 9,
**characterised in that** a layer of PVAC glue (22) is arranged between the upper surface (14) of the carrier plate (12) and the decorative layer (20).

11. Method, in particular postforming method, for producing a panel (10), comprising the steps of:
- providing a carrier plate (12) which has an upper (14) and a lower (16) main surface and a front surface (18) which extends from the upper main surface (14) to the lower main surface (16),
- providing a support edge (24) which is formed separately from the carrier plate (12),
- arranging the support edge (24) on the front surface (18) of the carrier plate (12),
- providing a decorative layer (20) which is formed separately from the carrier plate (12) and the support edge (24),
- arranging the decorative layer (20) on the upper surface (14) of the carrier plate (12),
- arranging a layer (28) of hot-melt adhesive on a portion of the decorative layer (20), which is intended to be connected to the support edge (24), and
- arranging the decorative layer (20) such that it extends from the upper surface (14) of the carrier plate (12) over the front surface (18) of the carrier plate (12) and the support edge (24) to the lower surface (16) of the carrier plate (12),
**characterised in that** the support edge (24) arranged on the carrier plate (12) has a sheet of parchment paper on the side thereof that faces away from the carrier plate (12), and **in that** the support edge (24) further comprises a backing paper and a plurality of, in particular phenolic resin-impregnated, core plies between the backing paper and the parchment paper.

12. Method according to claim 11,
**characterised in that** the step of arranging the layer (28) of hot-melt adhesive comprises applying the hot-melt adhesive at a temperature from 150°C to 250°C, in particular from 190°C to 210°C.

13. Method according to either claim 11 or claim 12,
**characterised in that** the method further comprises a step of heating the decorative layer (20).

## Revendications

1. Panneau (10), en particulier plaque de travail, comprenant
une plaque de support (12) ayant une surface principale supérieure (14) et une surface principale inférieure (16) et une surface avant (18) s'étendant de la surface principale supérieure (14) à la surface principale inférieure (16), un bord de support (24) formé séparément de la plaque de support (12) et disposé sur la surface avant (18) de la plaque de support (12), et
une couche décorative (20) formée séparément de la plaque de support (12) et du bord de support (24) et s'étendant depuis la surface supérieure de la plaque de support (12) via la surface avant (18) de la plaque de support (12) et le bord de support (24) jusqu'à la surface inférieure de la plaque de support (12),
dans lequel le bord de support (24) est bordé sur la surface avant (18) de la plaque de support (12) entre la couche décorative (20) et la plaque de support (12), et
dans lequel une couche (28) d'adhésif thermofusible est disposée entre le bord de support (24) et la couche décorative (20), laquelle couche (28) est adaptée pour connecter la couche décorative (20) au bord de support (24),
**caractérisé en ce que** le bord de support (24) disposé sur la plaque de support (12) présente une bande de papier parchemin sur son côté opposé à la plaque de support (12), et **en ce que** le bord de support (24) comprend en outre un papier support et, entre le papier support et le papier parchemin, une pluralité de couches de noyau, en particulier imprégnées de résine phénolique.

2. Panneau (10) selon la revendication 1,
**caractérisé en ce que** le bord de support (24) comprend une pluralité de bandes pressées ensemble.

3. Panneau (10) selon l'une quelconque des revendications 1 ou 2,
**caractérisé en ce que** le bord de support (24) est en forme de bande et est muni d'une structure sur au moins une de ses surfaces principales.

4. Panneau (10) selon l'une quelconque des revendications 1 à 3,
**caractérisé en ce qu'**une couche (26) d'adhésif thermofusible est en outre disposée entre le plaque de support (12) et le bord de support (24).

5. Panneau (10) selon l'une des revendications 1 à 4,
**caractérisé en ce que** la plaque de support (12), conjointement avec le bord de support (24) disposé sur celle-ci, présente un arrondi au niveau d'au moins l'un du bord entre la surface supérieure (14) de la plaque de support (12) et la surface avant (18) de la plaque de support (12) ou du bord de support (24) et du bord entre la surface inférieure (16) de la plaque de support (12) et la surface avant (18) de la plaque de support (12) ou du bord de support (24).

6. Panneau (10) selon l'une des revendications 1 à 5,
**caractérisé en ce qu'**un cordon supplémentaire (30) d'adhésif thermofusible est disposé entre la couche décorative (20) et au moins l'un du bord entre la surface supérieure (14) de la plaque de support (12) et la surface avant (18) de la plaque de support (12) et du bord entre la surface inférieure (16) de la plaque de support (12) et la surface avant (18) de la plaque de support (12).

7. Panneau (10) selon l'une des revendications 1 à 6,
**caractérisé en ce que** le bord de support (24) a une épaisseur d'au plus 1,5 mm, en particulier d'au plus 1,2 mm, avantageusement de 0,5 mm à 0,9 mm.

8. Panneau (10) selon l'une des revendications 1 à 7,
**caractérisé en ce que** la plaque de support (12) présente un évidement sur sa surface avant (18) dans lequel le bord de support (24) est inséré.

9. Panneau (10) selon la revendication 8,
**caractérisé en ce que** la surface du bord de support (24) faisant face à la couche décorative (20) est sensiblement de niveau avec la surface avant (18) de la plaque de support (12).

10. Panneau (10) selon l'une des revendications 1 à 9,
**caractérisé en ce qu'**une couche de colle blanche (22) est disposée entre la surface supérieure (14) de la plaque de support (12) et la couche décorative (20).

11. Procédé, en particulier un procédé de postformage, pour fabriquer un panneau (10), comprenant les étapes consistant à :
- fournir une plaque de support (12) ayant une surface principale supérieure (14) et une surface principale inférieure (16) et une surface avant (18) s'étendant de la surface principale supérieure (14) à la surface principale inférieure (16),
- fournir un bord de support (24) formé séparément de la plaque de support (12),
- disposer le bord de support (24) sur la surface avant (18) de la plaque de support (12),
- fournir une couche décorative (20) formée séparément de la plaque de support (12) et du bord de support (24),
- disposer la couche décorative (20) sur la surface supérieure (14) de la plaque de support (12),
- disposer une couche (28) d'adhésif thermofusible sur une partie de la couche décorative (20) qui est destinée à être connectée au bord de support (24), et
- disposer la couche décorative (20) de manière à ce qu'elle s'étende depuis la surface supérieure (14) de la plaque de support (12) via la surface avant (18) de la plaque de support (12) et le bord de support (24) jusqu'à la surface inférieure (16) de la plaque de support (12),
**caractérisé en ce que** le bord de support (24) disposé sur la plaque de support (12) présente une bande de papier parchemin sur son côté opposé à la plaque de support (12), et **en ce que** le bord de support (24) comprend en outre un papier support et, entre le papier support et le papier parchemin, une pluralité de couches de noyau, en particulier imprégnées de résine phénolique.

12. Procédé selon la revendication 11,
**caractérisé en ce que** l'étape d'agencement de la couche (28) de colle thermofusible comprend l'application de la colle thermofusible à une température de 150°C à 250°C, en particulier de 190°C à 210°C.

13. Procédé selon la revendication 11 ou 12,
**caractérisé en ce que** le procédé comprend en outre une étape de chauffage de la couche décorative (20).
